(19) Europäisches Patentamt
European Patent Office
Office européen des brevets

(11) **EP 2 698 234 B1**

(12) **EUROPÄISCHE PATENTSCHRIFT**

(45) Veröffentlichungstag und Bekanntmachung des Hinweises auf die Patenterteilung:
**15.02.2023 Patentblatt 2023/07**

(21) Anmeldenummer: **13004082.7**

(22) Anmeldetag: **16.08.2013**

(51) Internationale Patentklassifikation (IPC):
**B25J 9/04** *(1985.01)* **B25J 9/10** *(1985.01)*
**B25J 9/02** *(1985.01)* **B25J 9/16** *(1985.01)*
**B25J 15/02** *(1968.09)*

(52) Gemeinsame Patentklassifikation (CPC):
**B25J 9/026; B25J 9/046; B25J 9/1015; B25J 9/1676; B25J 9/1687; B25J 15/0253; G05B 2219/37567; G05B 2219/40053**

(54) **VORRICHTUNG UND VERFAHREN ZUM AUTOMATISIERTEN ENTNEHMEN VON IN EINEM BEHÄLTER ANGEORDNETEN WERKSTÜCKEN**

DEVICE AND METHOD FOR THE AUTOMATED REMOVAL OF WORKPIECES ARRANGED IN A CONTAINER

DISPOSITIF ET PROCÉDÉ DE PRÉLÈVEMENT AUTOMATISÉE DE PIÈCES AGENCÉES DANS UN RÉCIPIENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2012 DE 102012016537**
**06.08.2013 DE 102013013114**

(43) Veröffentlichungstag der Anmeldung:
**19.02.2014 Patentblatt 2014/08**

(60) Teilanmeldung:
**22167762.8 / 4 046 755**

(73) Patentinhaber: **LIEBHERR-VERZAHNTECHNIK GmbH**
**87437 Kempten (DE)**

(72) Erfinder:
• **MATTERN, Thomas**
**87669 Rieden (DE)**
• **HÄNSCHKE, David**
**87452 Altusried (DE)**
• **RIEDMILLER, Bernhard**
**87497 Wertach (DE)**
• **MUNDT, Alois**
**87435 Kempten (DE)**

(74) Vertreter: **Laufhütte, Dieter et al**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
EP-A2- 1 442 848 WO-A2-01/51259
CN-A- 101 559 597 DE-A1-102005 058 867
JP-A- 2005 014 108 US-A- 5 835 623
US-A1- 2012 063 873

**Beschreibung**

Die vorliegende Erfindung betrifft eine Vorrichtung zum automatisierten Entnehmen von in einem Behälter angeordneten Werkstücken. Insbesondere dient die Vorrichtung dabei dazu, Gegenstände, deren Position nicht vorher bekannt ist, sicher und gezielt aus einem Behälter zu entnehmen. Solche Vorrichtungen sind allgemein unter dem Begriff "Griff in die Kiste" bekannt geworden.

Übliche Vorrichtungen zum automatisierten Entnehmen von in einem Behälter angeordneten Werkstücken umfassen dabei eine Erfassungseinheit zum Erfassen der Werkstücke und einen über einen Roboterarm mit sechs Achsen bewegbaren Greifer zum Greifen und Entnehmen der Werkstücke aus dem Behälter. Dabei ist eine Steuerung vorgesehen, welche die Daten der Erfassungseinheit auswertet, die Bewegungsbahn des Roboterarms plant und diesen entsprechend ansteuert. Zum Bewegen des Greifers wird dabei gemäß dem Stand der Technik üblicherweise ein standardisierter Industrieroboter eingesetzt.

Druckschrift CN 101559597 A zeigt einen Portalmanipulator, bei welchem ein Manipulator über mehrere Schwenkachsen an einem Flächenportal angeordnet ist.

JP 2005 014108 A zeigt Roboter mit sieben oder mehr Achsen. DE 10 2005 058 867 A1 zeigt einen Roboterarm mit Zusatzachsen zum Bewegen einer Kamera entlang einer Bewegungsbahn. WO 01/51259 A2 zeigt einen Roboterarm, welcher modular aus einer Mehrzahl von Achselementen aufgebaut ist, welche jeweils ohne eigenen Antrieb auskommen.

Druckschrift EP 1 442 848 A2 zeigt eine Vorrichtung zum automatisierten Entnehmen von in einem Behälter angeordneten Werkstücken, bei welcher der Greifer über eine weitere Schwenkachse, durch welche die Ausrichtung des Greifers verändert werden kann, an einem Roboterarm angeordnet ist. US 2012/0063873 A1 zeigt ebenfalls eine Vorrichtung zum automatisierten Entnehmen von in einem Behälter angeordneten Werkstücken mit einer Zusatzachse.

US 5,835,623 zeigt eine Vorrichtung zum automatisierten Handhaben von Werkstücken, wobei ein Greifer an einem Flächenportal angeordnet ist.

Die Erfinder der vorliegenden Erfindung haben jedoch erkannt, dass mit einer solchen Anordnung ein zuverlässiges und prozesssicheres Entnehmen von Werkstücken aus einem Behälter nicht immer möglich ist.

Aufgabe der vorliegenden Erfindung ist es daher, Vorrichtungen zum automatisierten Entnehmen von in einem Behälter angeordneten Werkstücken zur Verfügung zu stellen, welche die Prozesssicherheit beim Entnehmen der Werkstücke aus dem Behälter erhöhen.

Diese Aufgabe wird erfindungsgemäß durch eine Vorrichtung gemäß Anspruch 1 gelöst.

Vorteilhafte Ausgestaltungen der vorliegenden Erfindung sind Gegenstand der Unteransprüche.

Die vorliegende Erfindung zeigt eine Vorrichtung zum automatisierten Entnehmen von in einem Behälter angeordneten Werkstücken, mit einer Erfassungseinheit zum Erfassen der Werkstücke und einem über einen Roboterarm mit mindestens sechs Achsen bewegbaren Greifer zum Greifen und Entnehmen der Werkstücke aus dem Behälter. Weiterhin ist eine Steuerung zur Auswertung der Daten der Erfassungseinheit, zur Bahnplanung und zur Ansteuerung des Roboterarms und des Greifers vorgesehen. Erfindungsgemäß ist vorgesehen, dass der Roboterarm zum Bewegen des Greifers ein Greifarmelement mit mindestens zwei weiteren Bewegungsachsen aufweist.

Die Erfinder der vorliegenden Erfindung haben dabei erkannt, dass durch die Verwendung von zwei weiteren Bewegungsachsen ein erheblich besserer Entnahmegrad erreicht werden kann, vor allem bei nicht symmetrischen oder nicht rotationssymmetrischen Teilen. Insbesondere können durch die insgesamt acht Achsen des Greifarms Werkstücke auch dann sicher entnommen werden, wenn diese in ungünstigen Positionen beispielsweise am Behälterrand oder tief unten im Behälter angeordnet sind. Dabei reduziert sich durch das erfindungsgemäße Greifarmelement der Platz, welcher zum Greifen in der Kiste benötigt wird. Mit der hierdurch gesteigerten Zugänglichkeit geht ein höherer Entnahmegrad einher, d.h. die Anzahl der Teile, welche ohne zusätzliche Maßnahmen gegriffen werden können. Weiterhin werden die Kollisionskonturen mit der Kiste verringert.

Bei den erfindungsgemäß vorgesehenen zusätzlichen Achsen handelt es sich bevorzugt um rotatorische Achsen, d.h. entweder um Drehachsen, welche eine Drehbewegung von 360° zulassen, oder um Schwenkachsen mit einem kleineren Schwenkbereich.

Das erfindungsgemäß eingesetzte Greifarmelement weist dabei besonders bevorzugt mindestens zwei rotatorische Achsen auf, und insbesondere ein Dreh- und ein Schwenkwerk. Insbesondere kann das Drehwerk dabei zwischen dem Greifer und dem Schwenkwerk angeordnet sein.

Besonders bevorzugt wird damit zum Bewegen des Greifers ein Roboterarm eingesetzt, an welchem das Greifarmelement angeordnet ist und damit zwei weitere rotatorische Achsen zur Verfügung stellt.

Die vorliegende Erfindung kann dabei mit beliebigen Greifern eingesetzt werden. Insbesondere kann es sich dabei beim Greifer um einen magnetischen, um einen pneumatischen und/oder um einen mechanischen Greifer handeln.

Besonders bevorzugt kommt die vorliegende Erfindung dabei mit einem mechanischen Greifer zum Einsatz, da dieser eine besonders hohe Greifgenauigkeit ermöglicht. Zudem erlauben die erfindungsgemäß vorgesehenen zusätzlichen Achsen ein besonders exaktes Heranfahren des Greifers an die Greifzone des zu greifenden Werkstückes. Hierdurch wird ein sicheres Greifen der Werkstücke im Behälter auch in schwierigen Greifsituationen möglich.

Insbesondere kann es sich bei dem erfindungsgemäßen Greifer dabei um einen Fingergreifer, beispielsweise um einen Zweifingergreifer handeln.

In einer Ausgestaltung der Erfindung kann der Greifer dabei gekröpft an dem Greifarmelement angeordnet sein. Eine solche gekröpfte Anordnung des Greifers ermöglicht ein vereinfachtes Greifen von Werkstücken, welche beispielsweise nahe an einer Behälterinnenwand angeordnet sind.

Insbesondere kann dabei die Mittelachse der Greifzone des Greifers gegenüber der Drehachse der letzten rotatorischen Achse versetzt angeordnet sein.

Besonders bevorzugt bilden dabei weiter oben am Greifarm angeordnete Elemente keine Störkanten im Hinblick auf den Greifer. Hierdurch wird verhindert, dass der Greifer nicht in die gewünschte Position zugestellt werden kann.

Insbesondere kann es sich bei dem erfindungsgemäßen Greifer um einen Fingerund/oder einen Backengreifer handeln, dessen Greiffinger bzw. Greifbacken an einer Außenkante des Greifers angeordnet sind. Hierdurch kann der Greifer auch ganz bis an die Seitenwände des Behälters hin zuverlässig greifen. Insbesondere kann es sich dabei um einen Zweifingergreifer bzw. um einen Zweibackengreifer handeln. Vorteilhafterweise ist dabei die Verbindungslinie zwischen den zwei Fingern bzw. den zwei Backen gegenüber der Drehachse der letzten rotatorischen Achse und insbesondere des letzten Drehgelenks nach außen versetzt. Insbesondere kann dabei die Verbindungslinie tangential zu der Drehachse der letzten rotatorischen Achse verlaufen.

In einer weiteren bevorzugten Ausgestaltung der vorliegenden Erfindung ist das Greifarmelement so am Roboterarm bzw. Flächenportal angeordnet, dass zum Greifen von Werkstücken immer nur der Greifarm und ggf. der letzte Schwenkarm des Roboterarms bzw. des Flächenportals, an welchem der Greifarm angeordnet ist, in den Behälter hineingeführt werden müssen, selbst wenn das zu greifende Werkstück am Boden des Behälters angeordnet ist. Insbesondere bildet das Greifarmelement dabei eine Greifarmverlängerung, wobei die Länge des Greifarms ggf. zusammen mit der Länge des letzten Schwenkarms des Roboterarms bzw. des Flächenportals, an welchem der Greifarm angeordnet ist, gleich oder größer ist als die Höhe der Seitenwände des Behälters. Die weiter oben angeordneten Teile des Roboterarms bzw. des Flächenportals bilden somit keine Störkanten, welche berücksichtigt werden müssten.

Das erfindungsgemäß eingesetzte Greifarmelement weist, wie oben bereits dargestellt, bevorzugt ein Dreh- und ein Schwenkwerk auf, wobei das Drehwerk zwischen dem Greifer und dem Schwenkwerk angeordnet ist und damit die letzte Achse des Greifarmelementes bildet.

Die beiden rotatorischen Achsen des Greifarmelementes stehen dabei bevorzugt senkrecht aufeinander und kreuzen sich besonders bevorzugt. Bevorzugt sind die beiden rotatorischen Achsen dabei möglichst nahe am Greifer angeordnet, so dass sich ein kompakter Aufbau ergibt.

Weiterhin bevorzugt weist das Greifarmelement in Bezug auf den Behälter und/oder die Werkstücke, welche gegriffen werden sollen, solche Abmessungen auf, dass das Greifarmelement unabhängig von der Position des zu greifenden Werkstückes innerhalb des Behälters in der zum Greifen notwendigen Greifposition in den Behälter eingeführt werden kann.

Hierfür ist insbesondere die maximale Kröpfung K des Greifers in Bezug auf die vorletzte rotatorische Achse, welche bevorzugt eine Schwenkachse darstellt, von entscheidender Bedeutung.

Da die Kröpfung K des Greifers in Bezug auf die vorletzte rotatorische Achse in Abhängigkeit von der Schwenkstellung dieser Achse sowohl von der Länge des Abschnittes des Greifarmelementes zwischen der letzten und der vorletzten rotatorischen Achse als auch von der Länge des Abschnittes des Greifarmelementes zwischen der letzten rotatorischen Achse und dem Greifer abhängt, ist die maximale Kröpfung K dabei als der maximale Abstand zwischen der Außenkante der vorletzten Achse des Greifarmelementes und der Außenkante des Greifers inklusive den Greifelementen definiert.

Bevorzugt weist das Greifarmelement in Bezug auf den Behälter dabei die Abmessungen

$$K < W/2$$

auf, wobei K den maximalen Abstand zwischen der Außenkante der vorletzten Achse des Greifarmelementes und der Außenkante des Greifers darstellt, und W die Länge der kleineren Seitenfläche des Behälters. Bevorzugt weist der Behälter dabei eine rechteckige Grundfläche auf.

Weiterhin bevorzugt weist das Greifarmelement in Bezug auf den Behälter und das Werkstück die Abmessungen

$$K < (W-Bw)/2$$

auf, wobei Bw die Dicke des Werkstückes in Eingreifrichtung des Greifers in das Werkstück darstellt, d.h. in der Richtung, in welcher der Greifer zum Greifen an bzw. in das Werkstück herangefahren wird. Bei einem Fingergreifer wäre dies die Richtung, in welcher die Greiffinger in das Werkstück gefahren werden.

Weiterhin bevorzugt weist das Greifarmelement in Bezug auf das Werkstück die Abmessungen

$$Lg < Lw$$

auf, wobei Lg die Länge des Greifers in Bewegungsrichtung der Greifelemente des Greifers, insbesondere in Richtung der Verbindungslinie zwischen den zwei Fingern bzw. den zwei Backen eines Zwei-Finger-Greifers oder eines Zwei-Backen-Greifers, darstellt, und Lw die maximale Länge des Werkstückes in einer Verbindungsrichtung zwischen zwei Greifpunkten des Werkstückes darstellt.

Der Behälter und/oder die Werkstücke können dabei Teil der erfindungsgemäßen Vorrichtung sein, welche damit ein System mit diesen Komponenten bildet.

Weiterhin kann erfindungsgemäß eine Ausgleichseinheit vorgesehen sein, welche bei Kollisionen des Greifers eine Ausweichbewegung erlaubt. Eine solche Ausgleichseinheit verhindert eine Überlastung der Bewegungsmechanik und sorgt zudem dafür, dass ohne häufige Systemstops gearbeitet werden kann.

Insbesondere ist die Ausgleichseinheit dabei so aufgebaut, dass diese bis zu einer gewissen ersten Grenzbelastung starr ist, so dass eine eindeutige Position des Greifers im Hinblick auf die Bewegungsachsen definiert ist. Insbesondere ist diese erste Belastung dabei höher als die durch das Eigengewicht des Greifers bzw. des Greifarms ausgeübte Belastung und/oder die Belastungen im Normalbetrieb. Hierdurch löst die Ausgleichseinheit erst dann aus, wenn eine Kollision eintritt.

Vorteilhafterweise wird der Greifarm dabei noch um eine definierte Wegstrecke weiterbewegt, wenn eine Kollision durch ein Auslösen der Ausgleichseinheit detektiert wird.

Vorteilhafterweise ist die Ausgleichseinheit so angeordnet, dass sie eine Ausweichbewegung des gesamten erfindungsgemäßen Greifarmelementes mit dem mindestens ein und vorteilhafterweise mindestens zwei weiteren Bewegungsachsen erlaubt. Insbesondere kann die Ausgleichseinheit dabei zwischen dem Roboterarm und dem Greifarmelement angeordnet sein, bzw. zwischen dem Flächenportal und dem Greifarmelement.

Alternativ oder zusätzlich kann auch eine in dem Greifarmelement integrierte Ausgleichseinheit vorgesehen sein, insbesondere zum Ausgleich von rotatorischen Bewegungen.

Erfindungsgemäß kann vorgesehen sein, dass die Steuerung die beiden Achsen des Greifarmelementes als reine Stellachsen ansteuert. Hierdurch ergibt sich trotz der zwei weiteren Achsen eine einfache Ansteuerung, bei welcher bspw. auf Standardsoftware zum Ansteuern des Roboterarms zurückgegriffen werden kann.

Insbesondere kann die Steuerung erfindungsgemäß lediglich die notwendige Endposition der Achsen des Greifarmelementes berechnen, welche ein Greifen des Werkstückes erlauben. Bevorzugt werden die beiden Achsen des Greifarmelementes dabei an ihre Zielposition gestellt, bevor das Heranfahren des Greifers an das zu greifende Werkstück erfolgt.

Weiterhin kann vorgesehen sein, dass die Steuerung die Zustellung des Greifers an das Werkstück über eine Ansteuerung der übrigen Achsen veranlasst. Insbesondere werden die übrigen Achsen dabei vorteilhafterweise so angesteuert, dass der Greifer ohne Kollision an das Werkstück herangefahren wird.

Weiterhin kann vorgesehen sein, dass die Position der Stellachsen des Greifarmelementes von der Steuerung lediglich im Hinblick auf die geänderte Position des Greifers in Bezug auf den Roboterarm bzw. das Flächenportal und/oder die durch die Verstellung der Stellachsen geänderten Störkanten des Greifarms berücksichtigt wird.

Insbesondere kann so eine vorhandene Steuersoftware zum Ansteuern des Roboterarms bzw. des Flächenportales eingesetzt werden, und dabei auf die übliche Bahnplanung zurückgegriffen werden, wobei das Greifarmelement lediglich im Hinblick auf die geänderte Position des Greifers in Bezug auf den Roboterarm bzw. das Flächenportal und die geänderten Störkantendes Greifarms berücksichtigt wird.

Alternativ kann vorgesehen sein, dass die zusätzlichen Achsen als zusätzliche vollwertige NC-Achsen in der Robotersteuerung integriert sind und damit eine synchrone Bewegung zulassen.

Insbesondere kann die erfindungsgemäße Vorrichtung der automatisierten Positionierung der entnommenen Werkstücke an einer Zielaufnahme dienen, wobei die Steuerung den Greifer so bewegt, dass die Werkstücke von dem Behälter aus direkt an der Zielaufnahme angeordnet werden. Die zusätzlichen Achsen gemäß der vorliegenden Erfindung erlauben die hierfür notwendige Greifgenauigkeit.

Die Vorrichtung gemäß der vorliegenden Erfindung kann dabei zum Handhaben beliebiger Werkstücke eingesetzt werden. Insbesondere kann die erfindungsgemä-βe Vorrichtung dabei auch zum Handhaben von Werkstücken eingesetzt werden, welche nur eine oder eine bestimmte Anzahl von fest definierten Greifzonen aufweist, welche durch den Greifer genau angefahren werden müssen.

Die Werkstücke können dabei aus beliebigen Materialien gefertigt sein, beispielsweise aus Metall, aus Kunststoff oder aus einer Kombination aus Metall und Kunststoff. Insbesondere kann es sich dabei auch um Werkstücke handeln, welche nur in einem Teilbereich eine Greifzone aufweisen. Beispielsweise kann es sich dabei um Werkstücke handeln, welche nur in einem Teilbereich aus Metall gefertigt sind, und welche in diesem Teilbereich durch einen magnetischen Greifer gegriffen werden müssen.

Die Werkstücke können dabei erfindungsgemäß ungeordnet im Behälter angeordnet sein, und dennoch sicher gegriffen werden. Die erfindungsgemäße Erfassungseinheit ermittelt dabei zunächst Daten in Bezug auf die Werkstücke im Behälter, wobei die Steuerung anhand dieser Daten einzelne Werkstücke identifiziert und aus diesen Werkstücken ein Werkstück auswählt, welches gegriffen werden soll. Anhand der Positionsdaten des zum Greifen ausgewählten Werkstücks erfolgt dann eine Bahnplanung für die Bewegungsachsen, über welche der Greifer an das Werkstück herangefahren werden soll. Bei der Bahnplanung erfolgt dabei vorteilhafterweise eine Kollisionsüberprüfung, welche sicherstellt, dass der Greifer bzw. der Greifarm bei der Bewegung zum Werkstück hin nicht mit Störkanten wie beispielsweise anderen Werkstücken oder den Behälterwänden kollidiert.

Zum Erfassen der Werkstücke kann dabei erfindungsgemäß ein optisches System eingesetzt werden, besonders bevorzugt ein Laserscanner, insbesondere ein 3D-Laserscanner. Die Erfassungseinheit kann dabei insbesondere oberhalb des Behälters angeordnet sein.

Die Vorrichtung kann besonders bevorzugt so angesteuert werden, dass die im Behälter befindlichen Werkstücke immer dann erfasst werden, wenn ein Werkstück entnommen wurde und gerade an einer Zielaufnahme abgelegt wird. Hierdurch kann das nächste zu greifende Werkstück identifiziert und ausgewählt werden, anhand dessen dann die Bahnplanung für den nächsten Greifvorgang erfolgt.

Das Greifarmelement kann einen Greifer tragen und mindestens zwei zusätzliche Achsen zum Bewegen des Greifers aufweisen. Vorteilhafterweise sind Greifer und/oder Greifarmelement dabei so aufgebaut, wie dies bereits oben im Hinblick auf die erfindungsgemäße Vorrichtung näher dargestellt wurde.

Insbesondere kann das Greifarmelement dabei mindestens zwei rotatorische Achsen aufweisen, insbesondere eine Schwenk- und eine Drehachse. Weiterhin vorteilhafterweise ist der Greifer dabei gekröpft am Greifarmelement angeordnet.

Die vorliegende Erfindung umfasst weiterhin ein Verfahren zum automatisierten Entnehmen von in einem Behälter angeordneten Werkstücken unter Verwendung der erfindungsgemäßen Vorrichtung, mit den Schritten:
Erfassen der Werkstücke; Greifen eines Werkstückes mit einem Greifer; und Entnehmen des Werkstückes aus dem Behälter. Erfindungsgemäß ist dabei vorgesehen, dass der Greifer über einen Roboterarm mit mindestens sechs Achsen und ein weiteres Greifarmelement mit mindestens zwei weiteren Bewegungsachsen bewegt wird.

Vorteilhafterweise wird das erfindungsgemäße Verfahren dabei so durchgeführt, wie dies bereits oben beschrieben wurde. Insbesondere können die zwei weiteren Bewegungsachsen des Greifarmelementes dabei als reine Stellachsen dienen, während die eigentliche Greifbewegung des Greifers wie üblich über die sechs Achsen des Roboterarms erfolgt. Alternativ können die zwei weiteren Bewegungsachsen als vollwertige NC-Achsen in die Robotersteuerung integriert werden und damit eine synchronisierte Bewegung zulassen.

Besonders bevorzugt erfolgen die erfindungsgemäßen Verfahren dabei unter Verwendung einer erfindungsgemäßen Vorrichtung, wie sie oben beschrieben wurde. Die vorliegende Erfindung umfasst weiterhin ein Computerprogramm zur Durchführung eines der erfindungsgemäßen Verfahren, wie sie oben beschrieben wurden, wobei das Computerprogramm Befehle umfasst, die bei der Ausführung des Programms auf einem Computer diesen veranlassen, das Verfahren auszuführen.

Dabei handelt es sich um ein Computerprogramm zur Implementierung einer Steuerung für eine Vorrichtung, wie sie oben beschrieben wurde.

Das erfindungsgemäße Computerprogramm kann dabei beispielsweise auf einem Datenträger oder im Speicher einer Steuerung abgespeichert sein.

Die vorliegende Erfindung wird nun anhand von Ausführungsbeispielen sowie Zeichnungen näher beschrieben.

Dabei zeigen:

Figur 1:     ein erstes Ausführungsbeispiel einer erfindungsgemäßen Vorrichtung, bei welchem der Greifer über ein Greifarmelement mit zwei weiteren Bewegungsachsen an einem sechsachsigen Industrieroboter angeordnet ist,

Figur 2:     eine Detailansicht des dabei eingesetzten Greifarmelementes,

Figur 3:     eine Prinzipdarstellung zur Erläuterung der Abmessungen eines erfindungsgemäßen Greifarmelementes in Bezug auf die Abmessungen eines Behälters und/oder der Werkstücke und

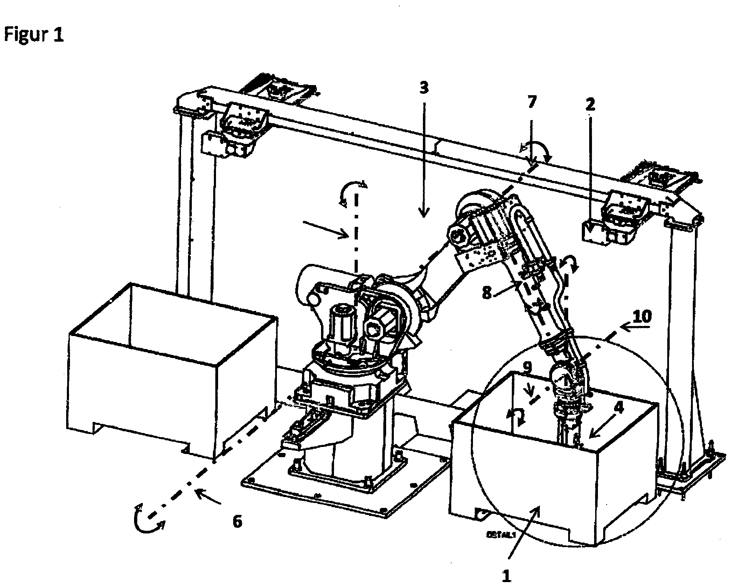

Figur 1 zeigt ein Ausführungsbeispiel einer erfindungsgemäßen Vorrichtung, welche zum Entnehmen von in einem Behälter 1 angeordneten Werkstücken dient. Insbesondere sind die Werkstücke dabei ungeordnet im Behälter 1 angeordnet.

Dabei ist eine Erfassungseinheit 2 vorgesehen, welche die im Behälter befindlichen Werkstücke erfasst. Insbesondere kann es sich dabei um einen Laserscanner, insbesondere um einen 3D-Laserscanner handeln. Die Erfassungseinheit ist oberhalb des Behälters angeordnet und sieht so in diesen hinein. Erfindungsgemäß ist dabei eine Steuerung vorgesehen, welche die von der Erfassungseinheit 2 generierten Daten auswertet. Hierdurch werden die im Behälter befindlichen Werkstücke identifiziert und ein zum Greifen geeignetes Werkstück ausgewählt. Anhand der Positionsdaten des ausgewählten Werkstückes erfolgt dann eine Bahnplanung für die Bewegungsbahn des Greifers.

Der Greifer wird dabei bei dem in Fig. 1 gezeigten Ausführungsbeispiel über einen Industrieroboter 3 angesteuert, dessen Roboterarm sechs Achsen aufweist. Insbesondere ist der Roboterarm dabei über eine erste vertikale Drehachse 5 auf einem Podest angeordnet, wobei ein erster Schwenkarm über eine Schwenkachse 6 an einem Basiselement des Roboterarms angeordnet ist. Am ersten Schwenkarm ist ein zweiter Schwenkarm über eine Schwenkachse 7 angeordnet. Dieser Schwenkarm weist eine Drehachse 8 auf, und trägt eine weitere Schwenkachse 9. An dieser ist ein dritter Schwenkarm angeordnet, welcher wiederum eine Drehachse 10 aufweist.

Erfindungsgemäß ist nun am Ende dieses Roboterarms ein Greifarmelement 4 angeordnet, welches zwei weitere Bewegungsachsen aufweist. Am Ende des Greifarmelementes ist dann der Greifer angeordnet, über welchen das Werkstück gegriffen werden kann.

Im Ausführungsbeispiel handelt es sich bei dem Greifer dabei um einen mechanischen Greifer. Alternativ könnte jedoch auch ein magnetischer oder pneumatischer Greifer zum Einsatz kommen.

Die zwei weiteren Bewegungsachsen des Greifarmelementes erlauben ein Greifen auch von solchen Werkstücken, welche beispielsweise in einer Position ganz an einer Seitenwand der Kiste 1 angeordnet sind und so ohne die zusätzlichen Achsen nicht ordnungsgemäß gegriffen werden könnten. Insbesondere können so auch Werkstücke mit nur einer einzigen möglichen Greifzone, welche exakt aus der richtigen Richtung angefahren werden muss, gegriffen werden.

Die Ansteuerung kann dabei so erfolgen, dass die beiden zusätzlichen Achsen des Greifarmelementes als reine Stellachsen angesteuert werden. Die Steuerung berechnet damit lediglich die zum Greifen des ausgewählten Werkstückes benötigte Endposition der letzten beiden Achsen. Die beiden Achsen des Greifarmelementes werden dann vor dem eigentlichen Greifvorgang in die so berechnete Zielposition gefahren.

Bei der Ansteuerung des Roboterarms 3 wird die Position der beiden Bewegungsachsen des Greifarmelementes dann nur im Hinblick auf die hierdurch veränderte Nullposition des Greifers, d.h. die geänderte Position des Greifers relativ zum letzten Schwenkarm des Roboterarms, sowie die durch diesen gebildeten Störkanten berücksichtigt. Ansonsten erfolgt die Bahnplanung für die Bewegung des Greifers für den Greifvorgang anhand der üblichen sechs Achsen des Roboterarms, und kann somit mit der Standardsoftware des Roboters durchgeführt werden.

Alternativ kann vorgesehen sein, dass die zusätzlichen Achsen als zusätzliche vollwertige NC-Achsen in der Robotersteuerung integriert sind und damit eine synchrone Bewegung zulassen.

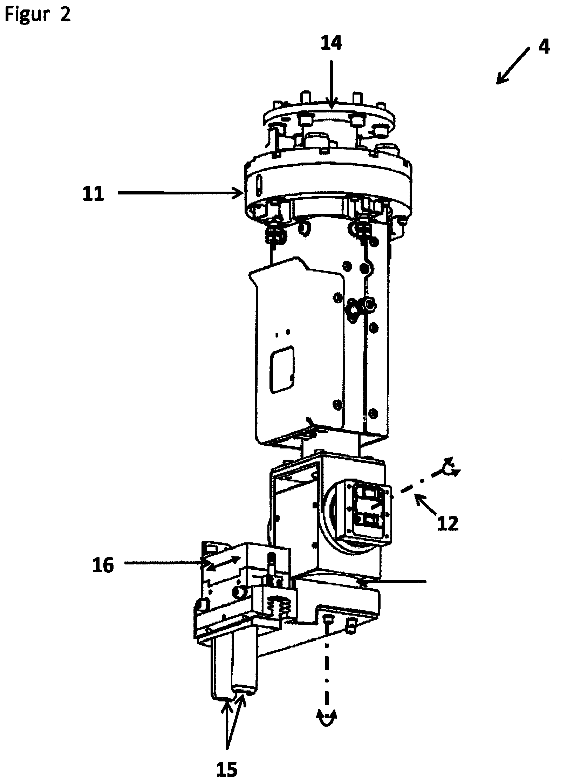

In Figur 2 ist ein bevorzugtes Ausführungsbeispiel eines Greifarmelementes 4 dargestellt. Dieses kann über die Verbindungseinheit 14 mit dem Ende des Roboterarms verbunden werden.

Bei den beiden Bewegungsachsen handelt es sich im Ausführungsbeispiel um rotatorische Achsen. Insbesondere ist dabei eine Schwenkachse 12 vorgesehen, welche im Ausführungsbeispiel senkrecht auf der letzten Drehachse 10 des Roboterarms steht. Weiterhin ist eine Drehachse 13 vorgesehen, welche dann wiederum senkrecht auf der Schwenkachse 12 steht.

Das Greifarmelement ist weiterhin mit einer Ausgleichseinheit 11 ausgestattet, welche zwischen dem Roboterarm und der ersten Bewegungsachse des Greifarmelementes angeordnet ist. Die Ausgleichseinheit 11 erlaubt so bei einer Kollision des Greifers mit Störkanten eine gewisse Ausgleichsbewegung des gesamten Greifarmelementes.

Das Greifarmelement bildet eine Greifarmverlängerung, wobei der Großteil des Roboterarms selbst überhaupt nicht mehr in den Behälter hineingeführt werden muss und somit auch keine Störkante mehr bildet, welche berücksichtigt werden müsste. Bevorzugt sind dabei die beiden Bewegungsachsen am unteren Ende des Greifarmelementes angeordnet. Bevorzugt muss dabei der Roboterarm oberhalb der Schwenkachse 9, d. h. bis auf den letzten Schwenkarm, nicht in den Behälter gefahren werden, und bildet damit keine Störkante.

Im Ausführungsbeispiel handelt es sich bei dem Greifer um einen mechanischen Greifer mit zwei Greiffingern 15, welche über einen Antrieb 16 aufeinander zu- und voneinander weg bewegt werden können. Die Greiffinger 15 sind dabei an der Außenkante des Greifarmelementes angeordnet, so dass das Greifarmelement keine Störkante aufweist, welche auf der Außenseite über die Greiffinger 15 hinausreichen würde. Die Verbindungslinie der Greiffinger 15 und damit die Bewegungsrichtung der Greiffinger verläuft dabei tangential zur Drehachse 13.

Weiterhin ist der Greifer gekröpft an dem Greifarmelement angeordnet. Insbesondere ist dabei der Greifer seitlich gegenüber der letzten Drehachse 13 versetzt angeordnet. Insbesondere ist dabei die Verbindungslinie der Greiffinger 15 gegenüber der Drehachse 13 nach außen versetzt. Hierdurch können Werkstücke, welche beispielsweise nahe an einer Seitenwand angeordnet sind, dennoch leicht gegriffen werden.

Insbesondere kann so der Greifer bis an die Seitenwand des Behälters herangefahren werden, während das übrige Greifarmelement immer noch einen ausreichenden Abstand zur Seitenwand aufweist.

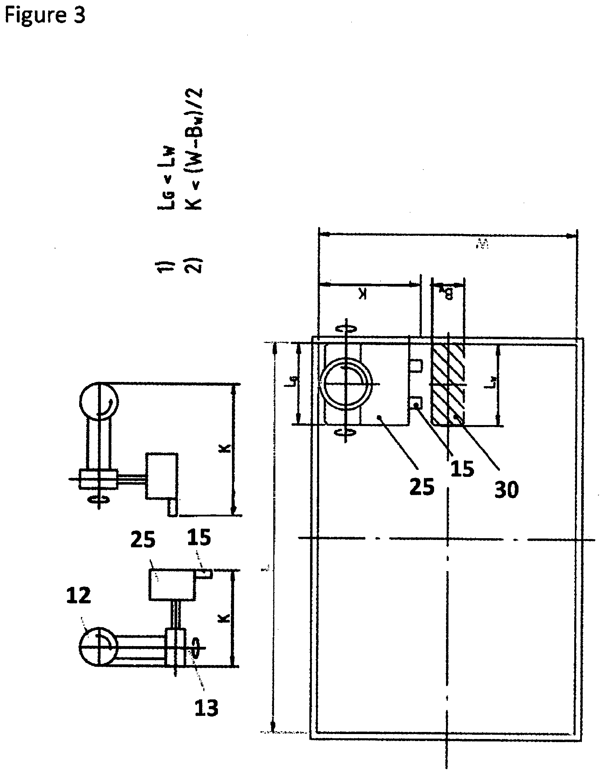

Wie anhand von Fig. 3 näher erläutert, weist das Greifarmelement dabei in Bezug auf den Behälter und/oder die Werkstücke, welche gegriffen werden sollen, solche Abmessungen auf, dass das Greifarmelement unabhängig von der Position des zu greifenden Werkstückes innerhalb des Behälters in der zum Greifen notwendigen Greifposition in den Behälter eingeführt werden kann.

Der Behälter 1 weist dabei eine rechteckige Grundfläche auf, wobei die Länge der längeren Seitenfläche des Behälters mit L angegeben ist und die Länge der kürzeren Seitenfläche mit W. Das Werkstück 30 weist in Eingreifrichtung des Greifers in das Werkstück eine Dicke Bw auf, und senkrecht hierzu in Richtung der Verbindungslinie der beiden Greifpunkte, an welchen die Greiffinger des Greifers ansetzen, eine Länge Lw.

Für die Manövrierbarkeit des Greifers ist dabei insbesondere die maximale Kröpfung K des Greifers in Bezug auf die Schwenkachse 12 von entscheidender Bedeutung. In den beiden kleinen Figuren in Fig. 3 ist dabei dargestellt, dass die Kröpfung K des Greifers in Bezug auf die Schwenkachse 12 von der Schwenkstellung dieser Achse abhängt. Die maximale Kröpfung ist damit der Wert, der sich bei der ungünstigsten Stellung der Schwenkachse ergibt und stellt dabei insbesondere den maximale Abstand zwischen der Außenkante der Schwenkachse 12 und der Außenkante des Greifers 25 inklusive den Greifelementen 15 dar.

Bevorzugt weist das Greifarmelement in Bezug auf den Behälter dabei die Abmessungen

$$K < (W-Bw)/2,$$

auf, kann also auch bei einem wie in Fig. 3 dargestellten im Behälter in Bezug auf die Schmalseite mittig angeordneten Werkstück 30 noch seitlich neben dem Werkstück in die Kiste gefahren werden.

Weiterhin bevorzugt weist das Greifarmelement in Bezug auf das Werkstück die Abmessungen

$$Lg < Lw$$

auf, wobei Lg die Länge des Greifers in Bewegungsrichtung der Greifelemente des Greifers darstellt, so dass der Greifer bei einem wie in Fig. 3 dargestellt an einer Seitenwand platzierten Werkstück dennoch an dieses herangefahren werden kann.

Die vorliegende Erfindung ermöglicht ein prozesssicheres Greifen von Werkstücken, welche so direkt aus einem Behälter entnommen und an einer Zielaufnahme abgelegt werden können.

Weiterhin lässt sich durch die vorliegende Erfindung auch eine 100%-ige Entleerung des Behälters erreichen.

**Patentansprüche**

1. Vorrichtung zum automatisierten Entnehmen von in einem Behälter angeordneten Werkstücken,

   mit einer Erfassungseinheit zum Erfassen der Werkstücke und einem über einen Roboterarm (3) mit mindestens 6 Achsen bewegbaren Greifer zum Greifen und Entnehmen der Werkstücke aus dem Behälter,
   und einer Steuerung zur Auswertung der Daten der Erfassungseinheit, zur Bahnplanung und zur Ansteuerung des Roboterarms und des Greifers,
   wobei
   der Roboterarm zum Bewegen des Greifers ein Greifarmelement (4) mit mindestens zwei weiteren Bewegungsachsen aufweist.

2. Vorrichtung nach Anspruch 1, wobei das Greifarmelement mindestens zwei rotatorische Achsen aufweist, insbesondere ein Dreh- und ein Schwenkwerk, wobei vorteilhafterweise das Drehwerk zwischen dem Greifer und dem Schwenkwerk angeordnet ist und/oder wobei es sich bei dem Greifer um einen mechanischen Greifer handelt, insbesondere um einen Finger- oder eine Backengreifer, insbesondere um einen Zwei-Finger-Greifer oder einen Zwei-Backen-Greifer, wobei bevorzugt die Greiffinger bzw. Greifbacken an einer Außenkante des Greifers angeordnet sind, wobei weiterhin vorteilhafterweise die Verbindungslinie zwischen den zwei Fingern bzw. den zwei Backen gegenüber der Drehachse der letzten rotatorischen Achse nach außen versetzt ist.

3. Vorrichtung nach einem der vorangegangenen Ansprüche, wobei der Greifer gekröpft an dem Greifarmelement angeordnet ist, wobei vorteilhafterweise die Mittelachse des Greifer gegenüber der Drehachse der letzten rotatorischen Achse, insbesondere des Drehwerks, versetzt angeordnet ist und/oder wobei vorteilhafterweise weiter oben am Greifarm angeordnete Elemente keine Störkanten zum Greifer bilden.

4. Vorrichtung nach einem der vorangegangenen Ansprüche, wobei das Greifarmelement dabei in Bezug auf den Behälter und/oder die Werkstücke, welche gegriffen werden sollen, solche Abmessungen auf, dass das Greifarmelement unabhängig von der Position des zu greifenden Werkstückes innerhalb des Behälters in der zum Greifen notwenigen Greifposition in den Behälter eingeführt werden kann.

5. Vorrichtung nach einem der vorangegangenen Ansprüche, wobei das Greifarmelement in Bezug auf den Behälter die Abmessungen

$$K < W/2$$

aufweist, wobei K den maximalen Abstand zwischen der Außenkante der vorletzten Achse des Greifarmelementes und der Außenkante des Greifers darstellt, und W die Länge der kleineren Seitenfläche des Behälters,
wobei vorteilhafterweise das Greifarmelement in Bezug auf den Behälter und das Werkstück die Abmessungen

$$K < (W-Bw)/2$$

aufweist, wobei Bw die Dicke des Werkstückes in Eingreifrichtung des Greifers in das Werkstück darstellt.

6. Vorrichtung nach einem der vorangegangenen Ansprüche, wobei das Greifarmelement in Bezug auf das Werkstück die Abmessungen

$$Lg < Lw$$

aufweist, wobei Lg die Länge des Greifers in Bewegungsrichtung der Greifelemente des Greifers, insbesondere in Richtung der Verbindungslinie zwischen den zwei Fingern bzw. den zwei Backen eines Zwei-Finger-Greifers oder eines Zwei-Backen-Greifers, darstellt und Lw die maximale Länge des Werkstückes in einer Verbindungsrichtung zwischen zwei Greifpunkten des Werkstückes darstellt.

7. Vorrichtung nach einem der vorangegangenen Ansprüche, wobei es sich um einen Finger- und/oder Backengreifer handelt, dessen Greiffinger bzw. Greifbacken an einer Außenkante des Greifers angeordnet sind, wobei es sich insbesondere um einen 2-Finger-Greifer bzw. einen 2-Backen-Greifer handelt, und/oder wobei das Greifarmelement so am Roboterarm bzw. Flächenportal angeordnet ist, dass zum Greifen von Werkstücken immer nur der Greifarm und ggf. der letzte Schwenkarm des Roboterams bzw. des Flächenportals, an welchem der Greifarm angeordnet ist, in den Behälter hineingeführt werden müssen, selbst wenn das zu greifende Werkstück am Boden des Behälters angeordnet ist und/oder wobei mindestens eine Ausgleichseinheit vorgesehen ist, welche bei Kollisionen des Greifers eine Ausweichbewegung erlaubt, wobei die Ausgleichseinheit vorteilhafterweise eine Ausweichbewegung des gesamten Greifarmelementes erlaubt und/oder wobei eine Ausgleichseinheit innerhalb der Greifarmverlängerung angeordnet ist, insbesondere eine Ausgleichseinheit zum Ausgleich von Dreh- und/oder Schwenkbewegungen.

8. Vorrichtung nach einem der vorangegangenen Ansprüche, wobei die Steuerung die beiden Achsen des Greifarmelementes als reine Stellachsen ansteuert, wobei die Steuerung vorteilhafterweise lediglich die notwendige Endposition dieser Achsen berechnet, welche ein Greifen des Werkstück erlaubt und/oder wobei die Steuerung vorteilhafterweise die Zustellung des Greifers an das Werkstück über eine Ansteuerung der übrigen Achsen veranlasst, wobei weiterhin vorteilhafterweise die Position der Stellachsen des Greifarmelementes von der Steuerung lediglich im Hinblick auf die geänderte Position des Greifers in Bezug auf den Roboterarm bzw. das Flächenportal und/oder die geänderten Störkanten des Greifarms berücksichtigt wird.

9. Vorrichtung nach einem der vorangegangenen Ansprüche, welche der automatisierten Positionierung der Werkstücke an einer Zielaufnahme dient, wobei die Steuerung den Greifer so bewegt, dass die Werkstücke von dem Behälter aus direkt an der Zielaufnahme angeordnet werden.

10. Verfahren zum automatisierten Entnehmen von in einem Behälter angeordneten Werkstücken unter Verwendung einer Vorrichtung nach einem der Ansprüche 1 bis 9, mit den Schritten:

   - Erfassen der Werkstücke,
   - Greifen eines Werkstückes mit einem Greifer,
   - Entnehmen des Werkstückes aus dem Behälter,

   wobei der Greifer über einen Roboterarm mit mindestens 6 Achsen und ein weiteres Greifarmelement mit mindestens zwei weiteren Bewegungsachsen bewegt wird.

11. Computerprogramm zur Durchführung eines Verfahrens nach Anspruch 10 und zur Implementierung einer Steuerung für eine Vorrichtung nach einem der Ansprüche 1 bis 9, umfassend Befehle, die bei der Ausführung des Programms durch einen Computer diesen veranlassen, das Verfahren nach Anspruch 10 auszuführen.

**Claims**

1. Device for the automated removal of workpieces arranged in a container, comprising a detecting unit for detecting the workpieces, and a gripper which is movable by means of a robotic arm (3) having six axles, and is intended for gripping and removing the workpiece from the container, and a control unit for evaluating the data of the detecting unit, for trajectory planning and for actuating the robotic arm and the gripper, wherein the robotic arm comprises a gripper arm element (4), having at least two further movement axles, for moving the gripper.

2. Method according to claim 1, wherein the gripper arm element comprises at least two rotatable axles, in particular one rotating and one slewing mechanism, wherein the rotating mechanism is advantageously arranged between the gripper and the slewing mechanism, and/or wherein the gripper is a mechanical gripper, in particular a finger or a jaw gripper, in particular a two-finger gripper or a two-jaw gripper, wherein the gripper fingers or gripper jaws are preferably arranged on an outside edge of the gripper, wherein further advantageously the connection line between the two fingers or the two jaws is offset towards the outside, with respect to the pivot pin of the last rotatable axle.

3. Device according to either of the preceding claims, wherein the gripper is arranged offset on the gripper arm element, wherein the central axle of the gripper is arranged so as to be offset with respect to the pivot pin of the last rotatable axle, in particular the rotating mechanism, and/or wherein advantageously elements arranged higher up on the gripper arm do not form any interfering edges with respect to the gripper.

4. Device according to any of the preceding claims, wherein in this case the dimensions of the gripper arm element, with respect to the container and/or the workpieces which are to be gripped, are such that the gripper arm element can be introduced into the container in the gripping position necessary for the gripping, irrespective of the position of the workpiece to be gripped, inside the container.

5. Device according to any of the preceding claims, wherein, with respect to the container, the gripper arm element is of the dimensions

$$K < W/2,$$

wherein K represents the maximum spacing between the outside edge of the penultimate axle of the gripper arm element and the outside edge of the gripper, and W represents the length of the shorter end face of the container, wherein advantageously the, with respect to the container and the workpiece, the gripper arm element is of the dimensions

$$K < (W-Bw)/2,$$

wherein Bw represents the thickness of the workpiece in the engagement direction of the gripper into the workpiece.

6. Device according to any of the preceding claims, wherein, with respect to the workpiece, the gripper arm element is of the dimensions

$$Lg < Lw,$$

wherein Lg represents the length of the gripper in the direction of movement of the gripper element of the gripper, in particular in the direction of the connection line between the two fingers or the two jaws of a two-finger gripper or a two-jaw gripper, respectively, and Lw represents the maximum length of the workpiece in a connection direction between two gripping points of the workpiece.

7. Device according to any of the preceding claims, wherein this is a finger and/or a jaw gripper, the gripper fingers or gripper jaws of which are arranged on an outside edge of the gripper, wherein this is in particular a two-finger gripper or a two-jaw gripper, and/or wherein the gripper arm element is arranged on the robotic arm or area gantry such that, in order to grip workpieces, always just the gripper arm and optionally the last pivot arm of the robotic arm or the area gantry, on which the gripper arm is arranged, have to be guided into the container, even if the workpiece to be gripped is arranged on the bottom of the container, and/or wherein at least one compensating unit is provided, which allows for an evasion movement of the gripper in the case of collisions, wherein the compensating unit advantageously allows for an evasion movement of the entire gripper arm element, and/or wherein a compensating unit is arranged within the gripper arm extension, in particular a compensating unit for compensating rotational and/or pivot movements.

8. Device according to any of the preceding claims, wherein the control unit actuates the two axles of the gripper arm element merely as adjusting axles, wherein the control unit advantageously calculates merely the required end position of said axles which allows for gripping of the workpiece, and/or wherein the control unit advantageously triggers the setting of the gripper onto the workpiece by way of an actuation of the remaining axles, wherein further advantageously the position of the adjusting axles of the gripper arm element is taken into account by the control unit merely with regard to the changed position of the gripper with respect to the robotic arm or the area gantry and/or the changed interfering edges of the gripper arm.

9. Device according to any of the preceding claims, serving for automated positioning of the workpieces at a target receptacle, wherein the control unit moves the gripper in such a way that the workpieces are arranged directly on the target receptacle, from the container.

10. Method for automated removal of workpieces arranged in a container, using a device according to any of claims 1 to 9, comprising the steps of:

    - detecting the workpieces,
    - gripping a workpiece using a gripper,
    - removing the workpiece from the container,

wherein the gripper is moved via a robotic arm comprising at least six axles and a further gripper arm element comprising at least two further movement axles.

11. Computer program for carrying out a method according to claim 10, for implementing control for a device according to any of claims 1 to 9, comprising commands which, when the program is run by a computer, prompt said computer to carry out the method according to claim 10.

**Revendications**

1. Dispositif pour le prélèvement automatisé de pièces agencées dans un récipient,

   avec une unité de détection pour la détection des pièces et un preneur déplaçable par l'intermédiaire d'un bras de robot (3) avec au moins 6 axes pour la saisie et le prélèvement des pièces à partir du récipient, et une commande pour l'évaluation des données de l'unité de détection, pour la planification de la trajectoire et pour la commande du bras de robot et du preneur, dans lequel le bras de robot pour le déplacement du preneur présente un élément de bras de saisie (4) avec au moins deux autres axes de déplacement.

2. Dispositif selon la revendication 1, dans lequel l'élément de bras de saisie présente au moins deux axes rotatifs, notamment un mécanisme de rotation et un mécanisme de pivotement, dans lequel avantageusement le mécanisme de rotation est agencé entre le preneur et le mécanisme de pivotement et/ou dans lequel le preneur consiste en un preneur mécanique, notamment en un preneur à doigts ou un preneur à mâchoires, notamment en un preneur à deux doigts ou un preneur à deux mâchoires, dans lequel de préférence les doigts de saisie ou mâchoires de saisie sont agencés sur un bord extérieur du preneur, dans lequel en outre avantageusement la ligne de jonction entre les deux doigts ou les deux mâchoires est décalée vers l'extérieur par rapport à l'axe de rotation du dernier axe rotatif.

3. Dispositif selon l'une quelconque des revendications précédentes, dans lequel le preneur est agencé de manière coudée sur l'élément de bras de saisie, dans lequel avantageusement l'axe central du preneur est agencé en décalage par rapport à l'axe de rotation du dernier axe rotatif, notamment du mécanisme de rotation, et/ou dans lequel avantageusement des éléments agencés plus haut sur le bras de saisie ne forment pas d'arêtes gênantes pour le preneur.

4. Dispositif selon l'une quelconque des revendications précédentes, dans lequel l'élément de bras de saisie a des dimensions telles par rapport au récipient et/ou aux pièces devant être saisies que l'élément de bras de saisie peut être introduit dans le récipient dans la position de saisie nécessaire à la saisie indépendamment de la position de la pièce à saisir à l'intérieur du récipient.

5. Dispositif selon l'une quelconque des revendications précédentes, dans lequel l'élément de bras de saisie présente par rapport au récipient les dimensions

$$K < W/2$$

dans lequel K représente la distance maximale entre le bord extérieur de l'avant-dernier axe de l'élément de bras de saisie et le bord extérieur du preneur, et W représente la longueur de la plus petite surface latérale du récipient, dans lequel avantageusement l'élément de bras de saisie présente par rapport au récipient et à la pièce les dimensions

$$K < (W-Bw)/2,$$

dans lequel Bw représente l'épaisseur de la pièce dans la direction d'engagement du preneur dans la pièce.

6. Dispositif selon l'une quelconque des revendications précédentes, dans lequel l'élément de bras de saisie présente par rapport à la pièce les dimensions

$$Lg < Lw$$

dans lequel Lg représente la longueur du preneur dans la direction de déplacement des éléments de saisie du preneur, notamment dans la direction de la ligne de jonction entre les deux doigts ou les deux mâchoires d'un preneur à deux doigts ou d'un preneur à deux mâchoires, et Lw représente la longueur maximale de la pièce dans une direction de jonction entre deux points de saisie de la pièce.

7. Dispositif selon l'une quelconque des revendications précédentes, dans lequel il s'agit d'un preneur à doigts et/ou à mâchoires dont les doigts de saisie ou mâchoires de saisie sont agencés sur un bord extérieur du preneur, dans lequel il s'agit notamment d'un preneur à 2 doigts ou d'un preneur à 2 mâchoires, et/ou dans lequel l'élément de bras de saisie est agencé sur le bras de robot ou le portique de surface de telle sorte que, pour la saisie de pièces, seul le bras de saisie et éventuellement le dernier bras de pivotement du bras de robot ou du portique de surface sur lequel le bras de saisie est agencé doivent toujours être introduits dans le récipient même si la pièce à saisir est agencée au fond du récipient et/ou dans lequel au moins une unité de compensation est prévue, qui permet un mouvement d'évitement en cas de collisions du preneur, dans lequel l'unité de compensation permet avantageusement un mouvement d'évitement de l'ensemble de l'élément de bras de saisie et/ou dans lequel une unité de compensation est agencée à l'intérieur du prolongement du bras de saisie, notamment une unité de compensation pour la compensation de mouvements de rotation et/ou de pivotement.

8. Dispositif selon l'une quelconque des revendications précédentes, dans lequel la commande commande les deux axes de l'élément de bras de saisie comme des axes de réglage purs, dans lequel la commande calcule avantageusement uniquement la position finale nécessaire de ces axes, qui permet une saisie de la pièce et/ou dans lequel la commande entraîne avantageusement l'approche du preneur vers la pièce par une commande des autres axes, dans lequel en outre avantageusement la position des axes de réglage de l'élément de bras de saisie n'est prise en compte par la commande qu'au regard de la position modifiée du preneur par rapport au bras de robot ou au portique de surface et/ou aux bords gênants modifiés du bras de saisie.

9. Dispositif selon l'une quelconque des revendications précédentes, qui sert au positionnement automatisé des pièces sur un réceptacle cible, dans lequel la commande déplace le preneur de telle sorte que les pièces sont agencées directement sur le réceptacle cible à partir du récipient.

10. Procédé pour le prélèvement automatisé de pièces agencées dans un récipient en utilisant un dispositif selon l'une quelconque des revendications 1 à 9, comprenant les étapes suivantes :

   - la détection des pièces,
   - la saisie d'une pièce avec un preneur,
   - le prélèvement de la pièce à partir du récipient,

   dans lequel le preneur est déplacé par l'intermédiaire d'un bras de robot avec au moins 6 axes et un autre élément de bras de saisie avec au moins deux autres axes de déplacement.

11. Programme informatique pour la réalisation d'un procédé selon la revendication 10 et pour la mise en oeuvre d'une commande pour un dispositif selon l'une quelconque des revendications 1 à 9, comprenant des instructions qui, lors de l'exécution du programme par un ordinateur, amènent celui-ci à exécuter le procédé selon la revendication 10.

Figur 1

Figur 2

# Figure 3

1) $L_G < L_W$
2) $K < (W-B_W)/2$

**IN DER BESCHREIBUNG AUFGEFÜHRTE DOKUMENTE**

**In der Beschreibung aufgeführte Patentdokumente**

- CN 101559597 A
- JP 2005014108 A
- DE 102005058867 A1
- WO 0151259 A2
- EP 1442848 A2
- US 20120063873 A1
- US 5835623 A